Europäisches Patentamt

(19) European Patent Office

Office européen des brevets

(11) Publication number: **0 050 144**
**B1**

(12) **EUROPEAN PATENT SPECIFICATION**

(45) Date of publication of patent specification: **26.03.86**

(21) Application number: **81901158.6**

(22) Date of filing: **17.04.81**

(86) International application number:
**PCT/HU81/00014**

(87) International publication number:
**WO 81/03073 29.10.81 Gazette 81/25**

(51) Int. Cl.⁴: **G 01 P 3/36**

(54) **Process for measuring motion- and surface characterizing physical parameters of a moving body.**

(30) Priority: **17.04.80 HU 93080**

(43) Date of publication of application:
**28.04.82 Bulletin 82/17**

(45) Publication of the grant of the patent:
**26.03.86 Bulletin 86/13**

(84) Designated Contracting States:
**AT DE GB**

(56) References cited:
**US-A-3 604 804**
**US-A-3 790 284**
**US-A-3 796 493**
**US-A-3 958 881**

**IEEE JOURNAL OF QUANTUM ELECTRONICS vol. QE-3, no. 11, November 1967 New York, US W.M. DOYLE et al.: "Use of an Oscillating Laser as a Heterodyne Receiver Preamplifier", page 479-484**

**V.V. Kozelkin, I.F. Usoltzev "Osnovy infrakrasnoi tekhniki", published in 1974, publishing house "Mashinostroenie", Moscow, pages 270-271, fig 927**

(73) Proprietor: **BUDAPESTI MŰSZAKI EGYETEM 3/9, Müegyetem rakpart H-1111 Budapest XI (HU)**

(72) Inventor: **ENGARD, Ferenc 51, Rákòczi ut H-1088 Budapest (HU)**
Inventor: **PECZELI, Imre 6, Hengermalom utca H-1119 Budapest (HU)**
Inventor: **RICHTER, Péter 40, Ráday utca H-1092 Budapest (HU)**

(74) Representative: **Kern, Wolfgang Dipl.-Ing. et al Patentanwälte Tischer, Kern & Brehm Albert-Rosshaupter-Strasse 65 D-8000 München 70 (DE)**

Courier Press, Leamington Spa, England.

## Description

The present invention relates to a process for measuring the following motion- and surface-characterizing physical parameters of a moving body instantaneous velocity of moving matter and quantities derived therefrom, as the length of movement, acceleration, peripheral velocity, angular velocity, revolution per minute, frequency, reflection or scattering power of moving matter and its variation, surface distribution and average value, the angular dependence of the aforementioned quantities and quantities derived therefrom like straightness, curvature etc., by means of coherent light source and, heterodyne detection of the light scattered or reflected from the moving body whereby the light of the coherent light source is divided by a beam splitting element into at least two parts, and one part of the light is projected directly to a photodetector, whereas the other part of the light is projected either directly or through an optical imaging element onto the moving body and wherein the light as scattered or reflected from the moving body is then projected by the beam splitting element onto an outcoupling element of the coherent light source and light further reflected at the coherent light source is directed via the beam splitting element onto the surface of the photodetector.

US-patent specification No. 3 604 804 discloses an apparatus for measuring a component of velocity in a predetermined direction of a moving surface as well as means for generating a laser beam, means for separating said beam into two components and for directing each of them upon a common area of the said surface including a partially reflecting means for one of the components and a totally reflecting means for the other one, and sensing means disposed with respect to the said surface to receive reflections of said two component beams from the said surface for determining the difference in Doppler shift frequency of portions of said two component beams, in order to measure the rate of movement of said surface in the said direction.

Moreover, there are known different methods for measuring of physical parameters of moving matters without establishing a physical contact to such a matter. A significant group of these methods is based upon detection of scattered or reflected light from the matter and since coherent light sources, i.e. lasers, have been developed measurements of a kind are possible making use of the interference ability of coherent light, whereby an accuracy in the order of the wavelength of light can be achieved in length measurements. The interferometric measurement technique is applied among others to the subject matter disclosed by US-patent specification No. 3 796 493.

The apparatus described in this patent specification is used for measurement of pitch of precision driving screws such as a lead screw. This task is performed by placing a corner cube reflector made of three parts onto a precision moving mechanism—a slide. This slide is moved by the driving screw to be measured. An optical code disk is rigidly in contact with the driving screw that gives a signal either for each revolution or for a certain angular turn. The measuring apparatus contains a laser, a partial reflector, two more reflectors and a detection system that is able to process the interference signal. The latter elements are not moving. The principle of the measurement is the following. Light radiated from the laser falls upon the partial reflector that projects part of it onto the standing mirror that reflects it back through the partial mirror onto the detector. The other part of the laser light is projected by the partial reflector onto the corner cube reflector moved by the lead screw and from there it is projected onto a standing mirror from where it is reflected back on the same path onto the partial reflector that projects it onto the detector where interference occurs. In case the number of interference fringes is counted during a complete turn of the screw that is indicated by the optical code disk and the accurate value of the laser frequency is known the pitch can be easily calculated.

The main advantage of this optical setup is that even if the slide moved by the driving screw makes a small angular displacement relative to the optical axis of the laser in the course of its movement, this displacement does not cause any errors because of the application of the corner cube reflector. On the other hand disadvantageous is the great number of optical elements and the requirement that the relative position of the standing optical elements, of the laser and of the detector may not change during the course of the measurement because such a change is the same kind of change in the interference as the movement initiated by the lead screw. Also the relative position of the elements of the corner cube reflector may not change. The maximum permitted mechanical instability that does not cause error in the measurement may not exceed half of the wavelength of the laser radiation. In the case of a He—Ne laser this upper error limit is about 0.3 micrometer.

A different kind of measuring technique to measure physical parameters of moving matter is the heterodyne detection of light reflected or scattered from the matter. The essence of it is the following. In case light with frequency "f" falls upon matter moving with velocity "v" then the frequency of the reflected or scattered light changes because of the Doppler effect in the frame of reference relative to that the matter moves with velocity "v" and in that the light source and the light detector are in rest.

In case the optical axis of the projected and the reflected or scattered laight are coincident, then

$$f' = f(1 + \frac{2v}{c} \cdot \cos \varphi)$$

where "c" is the velocity of light and "$\varphi$" is the angle between the direction of the velocity of the moving matter and that of the light projected onto the matter.

When part of the light beam coming directly from the coherent light source and the scattered or reflected light from the moving matter (that is different in frequency) are allowed to interfere on the surface of the detector in such a way that the two lights are spatially coherent—i.e. the phase difference over the whole surface area of the detector is constant—then as a result of the interference the two lights will amplify or attenuate each other with frequency $\Delta f = (f'—f)$ on the surface of the detector. In this way an electrical signal is produced on the output of the detector with frequency $\Delta f$ that is related to the velocity of the moving matter by the relation

$$\Delta f = (f \cdot \frac{2v}{c} \cdot \cos \varphi)$$

This is a well known description of the optical heterodyne technique and its applications can be found among others e.g. in the books Chu: "Laser Light Scattering" and Kallard: "Exploring Laser Light".

The difficulties with the optical heterodyne measuring technique are caused by the requirement of spatial coherence of the two lights on the surface of the detector that has been achieved by the followig methods.

1. The setup corresponds to a conventional Michelson interferometer in that one of the mirrors is replaced by the moving matter. In this arrangement the other mirror must be set and held in a fixed position relative to the source optical elements and detector with an accuracy in the order of the wavelength of light during the complete course of measurement.

2. On the principle of operation of laser—Doppler—anemometers; at the point of cross section of two coherent light beams with different directions the frequency of reflected or scattered light from the moving matter into two different directions changes differently because of the different angles relative to the direction of velocity of the moving matter. As the beams reaching the surface of the detector arriving from the area of cross section of the two beams are of different frequency but fulfilling the requirement of spatial coherence therefore they interfere. The spatial coherence is assured by the fact that the two light beams with different frequency arrive from the same point in space in identical paths at the surface of the detector. The disadvantage of this method is that the condition of spatial coherence is fulfilled only for a small volume in space. Therefore this method has been mainly used for measurement of velocity of moving media, e.g. liquids, gases, etc.

A very interesting optical heterodyne technique is used in the US patent 3 790 284. The apparatus disclosed in this patent makes measuring of straightness and roll possible.

The simplest example of this invention consists of a laser that radiates light with two frequencies $f_1$ and $f_2$, two polarizers, two partial reflectors, a Wollaston prism that is fixed to the moving slide of the apparatus, two stationary mirrors positioned at given angles relative to each other and the optical axis, an auxiliary mirror, two photodetectors and a reversible counter.

The principle of operation of the apparatus is the following: The light with two frequencies radiated by the laser passes through the polarizers and in this way the plane of polarization of the light component with frequency $f_1$ will be perpendicular to that of $f_2$. After that the partial reflector splits the beam and part of it falls upon a reference detector, where by means of interference it can be detected by the heterodyne method. The frequency output of this photodetector is $(f_2—f_1)$ that is transmitted to one of the inputs of the reversible counter. The other part of the beam from the partial reflector falls through another partial reflector onto a Wollaston prism that separates the $f_1$ and $f_2$ frequency beams because of their orthogonal polarization, and the two beams propagate at different paths. The two beams are projected onto a pair of mirrors positioned at given angles relative to each other and the optical axis, from which they are reflected back onto the Wollaston prism where they are recombined. Part of this recombined beam falls upon the measuring photodetector after being partially reflected by the second partial reflector and completely reflected by an auxiliary mirror, on the surface of which the light interferes and the heterodyne signal is transmitted to the other input of the reversible counter. When the Wollaston prism is not moving the output of this photodetector is $(f_2—f_1)$ as well. On the other hand if the slide moves parallel to the optical axis the frequency of the light falling upon the measuring detector changes because of the Doppler shift but the difference of the two frequencies is unchanged. When the slide moves perpendicular to the axis during the course of its motion then the velocity components of the Wollaston prism are different into the directions of propagation of the $f_1$ and $f_2$ frequency light beams emerging from it, therefore, they will be different for each one of the pair of reflectors. Thus the Doppler shift is different for the lights with frequency $f_1$ and $f_2$ and so the frequency of the output of the measuring photodetector will be different. The reversible counter stores the difference of impulse numbers coming from the two detectors that will characterize the straightness of the measured path.

Main advantage of this apparatus from optical point of view is that by using light with two frequency components and heterodyne detection errors caused by small movements of optical elements (except of reflecting mirrors) cancel and no error in measurement occurs from this reason. On the other hand a disadvantage is the great number of optical elements including some extraordinary optical elements as well. Also strict stability of position in time is still required for the reflecting mirrors.

From the aforementioned examples it is clear that both the interferometric and the heterodyne measuring technique have been used for measuring parameters of moving body with great difficulties. When the moving body has been a rigid body then some auxiliary equipment has had to be fastened to it, and when it is a moving medium then it has been possible to perform a measurement only in a small volume, and in most cases complicated and precise optical systems were needed.

Part of these difficulties are eliminated by US patent 3 958 881 but it raises new problems as well. This patent discloses a setup in which the light scattered back from the moving matter is passing through the outcoupling element of the laser into the laser where it is amplified, heterodyned with the original laser light and in this way the laser radiates a light modulated with a frequency corresponding to the difference frequency. This setup makes measurement in principle anywhere along the laser beam possible and does not require auxiliary equipment. Its disadvantage originates from the fact that the laser by character operates in a small bandwidth ($\Delta f_{laser}$) and within this bandwidth amplification of the active medium tends to zero because of saturation. Taking into account the small transmittance of the outcoupling element—generally a few percent—and the quality factor of the laser resonator that is close to but less then one even for 0 frequency difference a significant loss of light occurs by feeding the scattered light back into the laser. Because of the frequency dependence of the quality factor losses increase by increasing the frequency difference $\Delta f$. In conclusion the bandwidth $\Delta f_{laser}$ limits the theoretically measurable velocity:

$$V_{max} < \frac{\Delta f_{laser} \cdot c}{2f \cdot \cos \varphi}$$

because when $\Delta f > \Delta f_{laser}$ the laser does not transmit the light with the shifted frequency at all.

The loss of intensity makes the use of this method impossible in the case of small backscattered intensities. The simplest way of increasing the intensity could be achieved by using higher power lasers. The apparatus working on the basis of the above mentioned principle almost always contains $CO_2$ lasers. The losses could be decreased only by operating the laser in a non optimal regime, e.g. by lowering the reflection coefficient of the outcoupling element that increases the efficiency of feeding the light back into the laser and at the same time the active medium is not saturated; on the other hand in this way the intensity of the laser is lower therefore the signal—to—noise ratio is not improved. This has been experimentally verified also by N. M. Doyle, W. D. Berber and M. B. White in a paper:

"Use of an Oscillating Laser as a Heterodyne Receiver Preamplifier" (IEEE Journal of Quantum Electronics QE-3, 479, 1976). The purpose of the present invention is the simultaneous elimination of the difficulties mentioned above and to describe a proces that makes measurement of physical parameters of moving matter by optical heterodyne technique possible.

The problem to be solved by the invention therefore can be summarized in the following: a process is needed by which physical parameters of moving body can be measured in a non contact way using coherent light source in such a way that adjustment and stability in the order of the wavelength of light are not needed and the position of measurement is not restricted to a small volume. Furthermore it should make measurement possible in the case of small scattered light intensities, the maximum measurable velocity should not be limited by the laser and it should be as simple as possible.

The basis of the present invention is the fact that the problems listed above can be easily solved if instead of the well known methods the scattered or reflected light from the moving matter is projected onto the photodetector on a path identical with the path of the coherent light source. Namely in this case the direct and the scattered or reflected light seem to originate from identical light sources. The coherent light source that is preferably a laser possesses at least one outcoupling element that is capable to transmit and reflect the light, and the light beam radiated from the laser—by the operation principle of the laser—follows every motion of the outcoupling element. So if the outcoupling element of the coherent light source us used to reflect the light reflected or scattered from the moving matter than the condition of spatial coherence is automatically fulfilled. As the backscattered light is not fed back into the laser therefore it can be operated in its optimal regime—optical outcoupling element, saturated active medium—and the part of the backscattered light that is spatially coherent can be projected completely without loss on a path identical with that of the laser beam onto the surface of the photodetector. At the same time the maximum measurable difference frequency is not limited by the narrow bandwidth of the laser but by the bandwidth (F) of the photodetector that may reach $10^9$ Hz. The maximum measurable velocity is

$$V_{max} < \frac{F \cdot c}{2f \cdot \cos \varphi}$$

in this way $V_{max}$ may reach very high values. The present invention relates to a process according to claim 1.

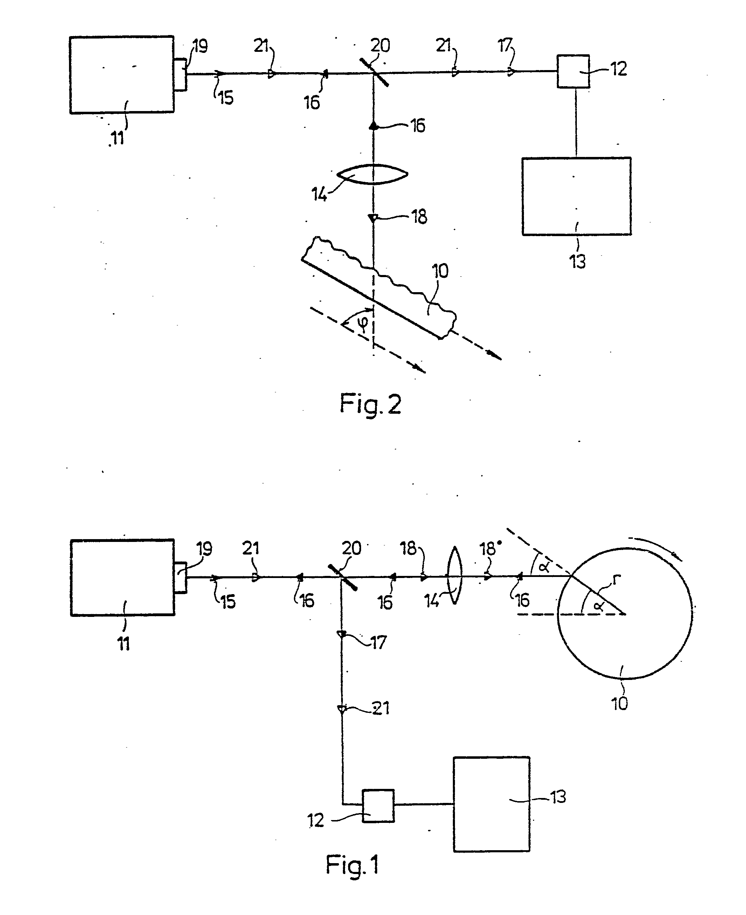

A more detailed description of the invention is given on the basis of the drawings which show a few embodiments and application examples of the invention. On the drawings (schematic views) Fig. 1 is an example which shows an arrangement for carrying out the process of determination of angular or peripherical velocity of a rotating cylinder;

Fig. 2 is a modified arrangement for carrying out the process of measuring surface characteristics of a moving rough surface;

Fig. 3 shows an embodiment for carrying out the process of the invention wherein more than one beam is projected onto the moving body that makes measurement of spatial motion of the moving matter possible.

In Fig. 1 the light beam 15 from the coherent light source 11—preferably a laser falls through the outcoupling element 19 upon beam-splitter 20—a partial reflector in our example. Reflected by beamspliter 20 part of the light beam 17 falls upon the photodetector 12—that is preferably a PIN diode. Through beamsplitter 20 and optical imaging element 14—that is a lens in the example—the other part of the light beam 18 falls upon moving matter 10—that is a rotating cylinder in the example. Reflected or scattered light 16 from the moving matter 10 through optical imaging element 14 and beam-splitter 20 falls upon the outcoupling element 19 of laser 11 and is reflected.

This reflected light 21 is reflected again by beamsplitter 20 falls upon the surface of photodetector 12 where it interferes with part of beam 17 thus on the output of photodetector 12 an electrical signal with frequency

$$\Delta f = (f \cdot \frac{2v}{c} \cdot \cos\ \varphi)$$

appears corresponding to the difference frequency. This electrical signal is processed by signal processing unit 13.

With the apparatus shown in Fig. 1 e.g. the revolution per second "n" of the rotating cylinder can be determined. "v" is the peripheral velocity of the cylinder. As for the revolution per second "n"

$$n = \frac{v}{2\pi r}$$

holds where "r" is the radius of the rotating cylinder, if the frequency "f" of the direct light 15 of the laser 11 and "r" and "φ" are known then the revolution per second can be determined by

$$n = \frac{c \cdot \Delta f}{4f \cdot r \cdot \pi \cdot \cos\ \varphi}$$

The value of φ is related to α by φ=90°−α and the angle α can be easily measured.

Important advantage of the process in this embodiment is that Δf can be measured within a fraction of the time of a complete revolution of the cylinder. In this way the instantenous value of the revolution per second and its fluctuation can be determined.

Adjusting φ=90°, runout of the rotating cylinder in the direction of light beam 15 can be determined as well. In case α=0, cos φ=1 and so

$$v = \frac{\Delta f}{2cf}$$

Integrating velocity "v" over the time "T" of a complete revolution the value of runout is received namely:

$$\Delta S = \int_{O}^{T} \frac{\Delta f}{2cf}\ \alpha\ t$$

Note that because of possible surface roughness of the cylinder during the course of runout measurement unwanted high-frequency wavepackets may appear on the output of photodetector 12 that can falsify the measurement. These high frequency components can be easily filtered if the signal processing unit 13 contains an appropriate low pass filter.

In Fig. 2 the light beam 15 from the coherent light source 11—preferably a laser falls on the beamsplitter 20—a partial reflector in our example. From the beamsplitter a part of the light beam 17 falls directly upon the photodetector 12. The other part of the light beam 18 is projected through the optical imaging element 14—a lens in our example—on the moving matter 10—a moving rough surface in our example. The scattered or reflected light 16 from the moving matter passing through the optical imaging element 14 is reflected by the beam splitter 20 and the outcoupling element 19 of laser 11, and this reflected light 21 by beamsplitter 20 is projected on the surface of the photodetector where it interferes with part of beam 17. In this way on the output of the photodetector 12 an electrical signal with frequency

$$\Delta f = (f \cdot \frac{2v}{c} \cdot \cos\ \varphi)$$

appears corresponding to the difference frequency. This electrical signal is processed by signal processing unit 13. With the apparatus shown in Fig. 2 size "s" of surface elements of the moving matter 10 perpendicular to the direction of light beam 18 and also the distribution of the size of these elements can be determined. Namely from the surface of the matter 10 moving in a way described above light is reflected onto the photodetector 12 in case the surface element intersecting the light beam 18 is perpendicular to said light beam. From this perpendicular surface element for a time period

$$t = \frac{s}{v \cdot \sin\ \varphi}$$

arrives the reflected light beam with frequency

$$f'=f(1+\frac{2v}{c}\cdot\cos\ \varphi)$$

onto the photodetector 12 on the output of which electrical signal with frequency

$$\Delta f=(f\cdot\frac{2v}{c}\cdot\cos\ \varphi)$$

lasts also for a time period "t".

In the equations used in the above example "v" is the velocity of the moving matter 10, "φ" is the angle between the directions of light beam 18 and the motion of moving matter 10. When a surface element of the moving matter 10 perpendicular to light beam 18 leaves the spot illuminated by light beam 18 then the continuous electrical signal from the output of photodetector 12 with frequency "Δf" is terminated, i.e. from photodetector 12 wavetrains with final lengths are transmitted to the signal processing unit 13.

When the signal processing unit 13 measures the value of frequency "Δf", the lengths of wavetrains "t" and the angle φ is known then the size of single surface elements can be determined by

$$s=\frac{\Delta f\cdot c\cdot t}{2f}\cdot tg\varphi$$

In this way for a surface moving by arbitrary velocity relative to the apparatus the surface structure can be examined and the size distribution of the surface elements can be determined. The smallest resolvable element size is in the range of the wavelength of the light.

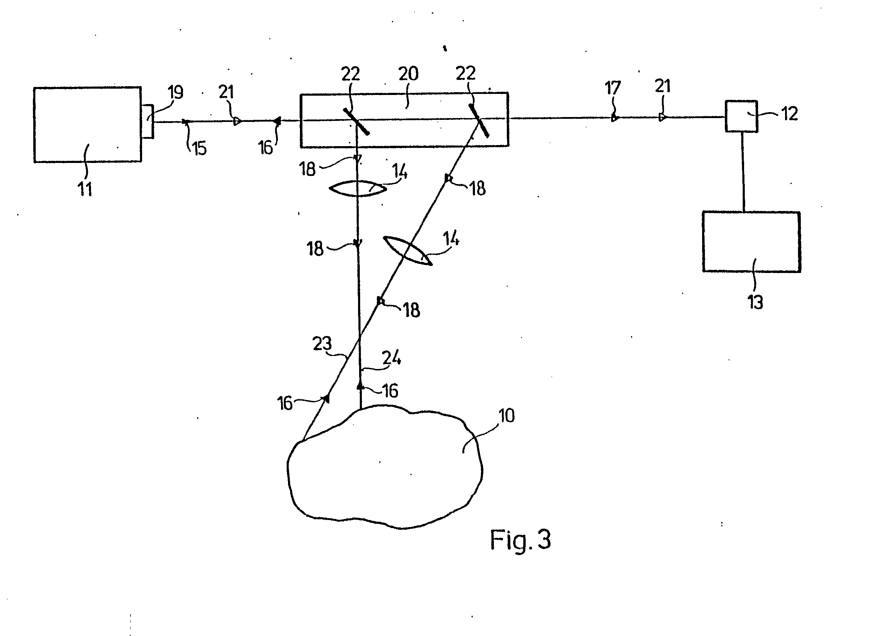

In Fig. 3 the coherent light source 11 is a laser the direct light 15 of which falls on beamsplitter 20. Through beamsplitter 20 part 17 of the light beam is projected onto the photodetector 12. The beamsplitter 20 in our example consists of two beam splitting elements 22. The beam splitting elements 22 are favourably partial reflectors. The other parts 18 of the light beam using the beam splitting elements 22 are projected through the optical imaging elements 14—in our example lenses—onto the moving matter 10. In this way light beams 23 and 24 illuminate the surface of the moving matter 10 from two different directions. The scattered or reflected light 16 from the moving matter 10 passes through optical imaging elements 14 and falls upon the beamsplitter 20, the beam splitting elements 22 project it onto the outcoupling element 19 of the coherent light source 11, from the outcoupling element is is reflected back and this reflected light 21 through beamsplitter 20 is projected onto the photosensitive surface of the photodetector 12, where it interferes with part of light beam 17. In this way on the output of photodetector 12 the sum of electrical signals with two frequencies appear "$\Delta f_1$" and "$\Delta f_2$".

$$\Delta f_1=(f\cdot\frac{2v_1}{c}\cdot\cos\ \varphi_1)$$

$$\Delta f_2=(f\cdot\frac{2v_2}{c}\cdot\cos\ \varphi_2)$$

where $v_1$ is the magnitude of the velocity of the point of the moving matter 10 illuminated by light beam 23; $v_2$ is the magnitude of the velocity of the point of the moving matter 10 illuminated by light beam 24; $\varphi_1$ is the angle between the direction of velocity of the point illuminated by light beam 23 and the direction of light beam 23; $\varphi_2$ is the angle between the direction of velocity of the point illuminated by light beam 24 and the direction of light beam 24.

From the equations above the velocity components into the direction of light beams 23 and 24 of the moving matter 10 can be determined, because the signal processing unit 13 can separate the electrical signals with different "$\Delta f_1$" and "$\Delta f_2$" frequencies. With this method not only the one component of the velocity of the moving matter corresponding to a certain direction can be determined but both the magnitude and the direction of the velocity of the motion can be measured. In the case of a beamsplitter which illuminates with at least three non coplanar light beams the moving matter is used then the magnitude and direction of three dimensional motion can be determined, if the light beams illuminate the same spot of the moving matter. If the moving matter can be considered a rigid body and the light beams illuminate different spots, translational motion in space can be examined. With an analysis of the heterodyne signal in case of simultaneous translation and rotation the individual components of motion can be separated. If the moving matter can not be considered as a rigid body using several beams, relative motion of certain points of the matter can be examined. The smallest measurable volume within which the parameters of motion can not be resolved is in the range of the wavelength of light. In certain applications, when the surface of the moving matter is reflecting no imaging elements are necessary.

It is worth to note that it has not been mentioned and it is not mentioned in the claims as well only where it is of decisive importance that the light intensity may significantly change while passing through or being reflected by certain optical elements, and other reflections—not mentioned in this description—may occur. These effects are of secondary importance and do not concern the essence of the invention. They can be considered as constant loss factors. An example is considered on the basis of Fig. 2 about the error in case a plane-parallel plate is used for beamsplitter 20 that reflects 10% of the incident light and transmits the rest. All the other elements are considered to be ideal and only the reflected or scattered light 16 is considered. Only 10% of the reflected or scattered light 16 from the moving matter 10 is reflected by beamsplitter 20 towards the outcoupling element 19 of the coherent light source 11, the rest passes through beamsplitter 20 and is radiated into the free space. An almost total reflection occurs on the outcoupling element 19 of the coherent light source 11 and 90% of the light 21 reflected from the outcoupling element 19 passes through beamsplitter 20 and falls upon the surface of photodetector 12. That means that only 9% of the scattered or reflected light 16 reaches the photodetector 12. From beamsplitter 20, 10% of the light 21 reflected from outcoupling element 19 may get back through the imaging element 14 onto the moving matter 10. This is only 1% of the original reflected or scattered light. Even if this light could reach by some total reflection photodetector 12 and interfere on its surface—with a different heterodyne frequency—this signal would be negligible to the original signal because as it has to pass the same path it may produce a signal with maximum amplitude 1% relative to the useful light, that is negligible.

The advantages of the process described for the present invention is summarized in the following.

It makes possible measurement of physical parameters of moving matter using a coherent light source by heterodyne detection of light scattered or reflected by the moving matter in such a way that by nature of the method it does not require adjustment and stability with interferometric accuracy the illuminating beam must only hit the moving matter.

In case only one beam is projected onto the moving matter then the position of measurement can be anywhere along this beam within the limit of sensitivity of the apparatus.

In case if there is a mean to follow the motion of moving matter on its course of motion or its motion is limited to a region where it is continuously illuminated by the beam or beams than the spatial dimensions of the volume of measurement are limited only by the limits of sensitivity.

Measurements of the parameters of the moving matter with the method described in the invention are of non contact nature and in general do not require attaching any optical element or elements to the moving matter to be examined.

Because the operational frequency of the coherent light source is high therefore measurements can provide instantaneous values of the parameters measured (e.g. in case of a He—Ne laser when the velocity of the moving matter parallel with light beam radiated is 1 mm/sec then the frequency of the photodetector signal is about 3 kHz).

As the process described in this invention can be realized with low power lasers as well e.g. He—Ne or semiconductor lasers, that may cost a fraction of the price of a $CO_2$ laser and the realization does not require fine mechanical elements, its realization is cheaper than that of the previously known methods.

In conclusion the process described herein provides the accuracy of the previous interferometric and heterodyne methods of measurement and at the same time it extends the range of possible applications and realization of the process disclosed in this invention can be very easily realized.

**Claims**

1. Process for measuring motion- and surface characterizing physical parameters of a moving body (10) by means of coherent light source (11) and heterodyne detection of the light (16) scattered or reflected from the moving body (10) whereby the light (15) of the coherent light source (11) is divided by a beam splitting element (20) into at least two parts, and one part (17) of the light is projected directly to a photodetector (12), whereas the other part (18) of the light is projected either directly or through an optical imaging element (14) onto the moving body (10) and wherein the light (16) scattered or reflected from the moving body (10) is then projected by the beam splitting element (20) onto an outcoupling element (19) of the coherent light source (11) and light (21) further reflected at the coherent light source (11) is directed via the beam splitting element (20) on to a surface of the photodetector (12), characterized in that the coherent light source (11) is arranged to be a continuously operating He—Ne-gas laser, the light (16) transmitted back to the coherent light source is reflected at the outcoupling element (19) and is led onto the surface of the photodetector (12) along a path the optical length of which is equal to that from the outcoupling element (19) to the beam splitting element (20) together with that of the one part (17), and that the motion- and surface characterizing parameters for the moving body (10) are determined by means of processing the electrical signal appearing on the output of the photodetector (12) by a signal processing unit (13).

2. Process according to claim 1 for measuring directional characteristics of physical parameters of the moving body (10), characterized by dividing the light (15) from the coherent light source (11) into more than two parts, projecting at least two other parts (18) of the light beam either directly or through optical imaging elements (14) at different angles either to identical or different points of the moving body (10), projecting the reflected or scattered light (16) from the moving body (10) either directly or through optical imaging elements (14) by the beam splitting element (20) to the outcoupling element (19) of the coherent light source (11) and projecting from there the reflected light (21) by the beam splitting element (20) onto the surface of the photodetector (12).

**Patentansprüche**

1. Verfahren zur Messung von bewegungs- und oberflächenkennzeichnenden physikalischen Parametern eines sich bewegenden Gegenstandes (10) mit Hilfe einer kohärenten Lichtquelle (11) und durch Überlagerungsdetektion des von dem sich bewegenden Gegenstand (10) gestreuten oder reflektierten Lichtes (16), wobei das Licht (15) der kohärenten Lichtquelle (11) durch einen Strahlspalter (20) in wenigstens zwei Teile aufgeteilt wird, von denen der eine Teil (17) direkt auf einen Photodetektor (12) projiziert wird, während der andere Teil (18) des Lichtes entweder direkt oder über ein optisches Abbildungselement (14) auf den sich bewegenden Gegenstand (10) projiziert wird und wobei das von dem sich bewegenden Gegenstand (10) gestreute oder reflektierte Licht (16) daraufhin durch den Strahlspalter (20) auf ein Auskoppelelement (19) der kohärenten Lichtquelle (11) geworfen und von der kohärenten Lichtquelle (11) weiter reflektiertes Licht (21) direkt über den Strahlspalter (20) auf ein Oberfläche des Photodetektors (12) gerichtet wird, dadurch gekennzeichnet, daß die kohärente Lichtquelle (11) ein kontinuierlich arbeitender He—Ne-Gaslaser ist, daß das auf die kohärente Lichtquelle zurückgeworfene Licht (16) an dem Auskoppelelement (19) reflektiert wird und auf die Oberfläche des Photodetektors (12) längs einer Bahn gelangt, deren optische Länge gleich der von dem Auskopplungselement (19) zu dem Strahlspalter (20) führenden zusammen mit derjenigen des einen Teils (17) ist, und daß die bewegungs—und oberflächenkennzeichnenden Parameter des sich bewegenden Gegenstandes (10) dadurch bestimmt werden, daß das am Ausgang des Photodetektors (12) erscheinende elektrische Signal durch eine Signalverarbeitungseinheit (13) verarbeitet wird.

2. Verfahren nach Anspruch 1 zur Messung von Richtungseigenschaften physikalischer Parameter des sich bewegenden Gegenstandes (10), dadurch gekennzeichnet, daß das Licht (15) von der kohärenten Lichtquelle (11) in mehr als zwei Teile aufgeteilt wird, daß wenigstens zwei andere Teile (18) des Lichtstrahls entweder direkt oder durch optische Abbildungselemente (14) unter verschiedenen Winkeln entweder auf identische oder unterschiedliche Stellen des sich bewegenden Gegenstandes (10) geworfen wird, daß das reflektierte oder gestreute Licht (16) von dem sich bewegenden Gegenstand (10) entweder direkt oder über optische Abbildungselemente (14) durch den Strahlspalter (20) aus das Auskoppelelement (19) der kohärenten Lichtquelle (11) geworfen wird, und das von dort aus das reflektierte Licht (21) mit Hilfe des Strahlspalters (20) Licht auf die Oberfläche des Photodetektors (12) projiziert wird.

**Revendications**

1. Procédé de mesure de paramètres physiques d'un corps mobile (10) caractéristiques de son mouvement et de sa surface au moyen d'une source de lumière cohérente (11) et par détection hétérodyne de la lumière (16) diffusée ou réfléchie par le corps mobile (10), suivant lequel la lumière (15) partant de la source le lumière cohérente (11) est divisée en au moins deux parties par un élément séparateur de faisceaux (20), une partie (17) de la lumière étant projetée directement vers un photodétecteur (12) tandis que l'autre partie (18) est projetée sur le corps mobile (10) soit directement, soit à travers un élément de représentation optique (14), et dans lequel la lumière (16) diffusée ou réfléchie par le corps mobile (10) est ensuite projetée par l'élément séparateur de faisceaux (20) sur un élément (19) de la source de lumière cohérente (11), la lumière (21) réfléchie ensuite par la source de lumière cohérente (11) étant dirigée par l'élément séparateur de faisceaux (20) sur une surface du photodétecteur (12), caractérisé en ce que la source de lumière cohérente (11) est constituée par un laser au gaz He—Ne à fonctionnement continu, en ce que la lumière (16) retournant à la source de lumière cohérente est réfléchie par un élément (19) et dirigée sur la surface du photodétecteur (12), ainsi que la première partie (17) suivant un trajet dont la longueur optique est égale à cell existant entre l'élément (19) et l'élément séparateur de faisceaux (20), et en ce que les paramètres caractéristiques du mouvement et de la surface du corps mobile (10) sont déterminés par des moyens de traiter le signal électrique apparaissant à la sortie du photodétecteur par une unité de traitement du signal (13).

2. Procédé de mesure de paramètres physiques d'un corps mobile (10) suivant la revendication 1, caractérisé en ce que la lumière (15) est divisée en plus de deux parties au départ de la source de lumière cohérente (11), en ce que l'on projette au moins deux autres parties (18) du rayon lumineux sur des points identiques ou bien différents du corps mobile (10) soit directement, soit à travers des éléments de représentation optique (14) situés à des angles différents, en ce que la lumière réfléchie ou diffusée (16) est projetée à partir du corps mobile (10) vers l'élément (19) de la source de lumière cohérente (11) soit directement, soit à travers des éléments de représentation optique (14) et en ce qu'à partir de là, la lumière réfléchie (21) est projetée par l'élément separateur de faisceaux (20) sur la surface du photodétecteur (12).

Fig. 2

Fig. 1

Fig. 3